# EUROPÄISCHE PATENTSCHRIFT

(11) **EP 1 968 833 B1**
(45) Veröffentlichungstag und Bekanntmachung des Hinweises auf die Patenterteilung: **02.05.2012**
(21) Anmeldenummer: 06819894.4
(22) Anmeldetag: 01.12.2006
(51) Int. Cl.: B60T 11/04, B60T 13/02, B60T 13/74

(54) **SPINDEL FÜR EINE ELEKTROMECHANISCHE FESTSTELLBREMSE SOWIE SPINDELANTRIEB**
SPINDLE FOR AN ELECTROMECHANICAL PARKING BRAKE, AND SPINDLE DRIVE
BROCHE POUR FREIN DE STATIONNEMENT ÉLECTROMÉCANIQUE ET MÉCANISME D ENTRAÎNEMENT DE BROCHE

(30) Priorität: 04.01.2006 DE 102006000794
(43) Veröffentlichungstag der Anmeldung: 17.09.2008
(73) Patentinhaber: SIEMENS AKTIENGESELLSCHAFT, 80333 München (DE)
(72) Erfinder: STÜRZER, Jürgen, 94330 Aiterhofen (DE)
(86) Internationale Anmeldenummer: PCT/EP2006/069195
(87) Internationale Veröffentlichungsnummer: WO 2007/077068

(56) Entgegenhaltungen:
- EP-A1- 0 710 595
- DE-A1- 19 653 541

## Beschreibung

Die Erfindung betrifft nach Anspruch 1 eine Spindel, die insbesondere als Bauteil für einen Spindelantrieb verwendet werden kann. Der Spindelantrieb kann für eine Feststellbremse eines Kraftfahrzeugs benutzt werden, die auf elektromechanischem Wege betätigt wird. Die Spindel ist zu diesem Zweck mit einem Ende eines Zugseils verbunden, mit dem die Feststellbremse mechanisch betätigt wird. Des Weiteren betrifft die Erfindung nach dem Gattungsbegriff des nebengeordneten Anspruchs 8 einen Spindelantrieb, der mit der erfindungsgemäßen Spindel ausgerüstet ist und elektromechanisch angetrieben wird.

Die elektromechanische Feststellbremse ersetzt die in einem Fahrzeug üblicherweise befindliche Handbremse, mit der ein Wegrollen des stehenden Fahrzeugs verhindert werden soll. Durch den Einbau der elektromechanischen Feststellbremse entfällt der Bremshebel, der als Handbremshebel oder Fußpedal im Innenraum des Kraftfahrzeugs üblicherweise angeordnet ist. Dadurch kann der Fahrzeuginnenraum neu gestaltet werden. Des Weiteren können mit der elektromechanischen Feststellbremse Funktionen realisiert werden, die mit der bekannten üblichen Feststellbremse nicht realisierbar sind. Beispielsweise kann ein automatisches Betätigen der Feststellbremse immer dann erfolgen, wenn das Fahrzeug zum Stillstand gekommen ist. Des Weiteren durch eine automatische Steuerung der elektromechanischen Feststellbremse ein unerwünschtes Rollen des Fahrzeugs insbesondere an einer Steigungs- oder Gefällstrecke verhindert und/oder ein erneutes Anfahren insbesondere an einer Steigungsstrecke erleichtert werden.

Es ist bereits bekannt, eine Feststellbremse von einem Elektromotor anzutreiben. Dazu wird ein Bowdenzug von der Spindel durch Zug betätigt. Die Zugbewegung wird auf die Bremsbacken der Feststellbremse übertragen.

Es ist des Weiteren bekannt, dass zur Betätigung des Bowdenzugs das Zugseil mit seinem freien Ende mit einer Vorrichtung an der Spindel zum Beispiel durch Einhängen in eine entsprechende Klinke befestigt wird. Dadurch kann die von dem Elektromotor erzeugte Zugkraft von der Spindel auf das Zugseil in axialer Richtung übertragen werden. Zum Lösen der Feststellbremse wird die Spindel von dem Elektromotor in ihre Ausgangslage zurückgedreht, so dass das Zugseil entlastet und dadurch die Bremsanlage freigegeben wird.

Für die mechanische Verbindung zwischen dem freien Ende des Zugseils und der Spindel sind zwei unterschiedliche Lösungen bereits bekannt. Bei einer bekannten Ausführungsform wird beispielsweise das Zugseil unlösbar mit der Spindel verbunden. Das hat den Nachteil, dass bei einem Bruch des Zugseils die gesamte Einheit inklusive der Spindel ausgetauscht werden muss.

Bekannt ist des Weiteren, dass das Zugseil an seinem freien Ende mit einem Nippel ausgebildet ist. Der Nippel wird in eine entsprechende Zugvorrichtung an der Spindel eingehängt. Bei dieser Lösung ist nachteilig, dass durch die Zugvorrichtung die Baulänge des Spindelantriebs in unerwünschter Weise vergrößert wird und damit ein größerer Bauraum erforderlich ist.

EP 0 710 595 A1 betrifft eine Bremse, aufweisend ein Gehäuse, das dazu ausgelegt ist, vorzugsweise in der Nähe der Hinterachse des Fahrzeugs angebracht zu werden und das ein Zahnrad enthält, eine Schraube längs durch das Zahnrad, das durch eine Übersetzung beiderseits davon beweglich ist, und auf solche Weise profiliert ist, dass sie durch das Zahnrad angetrieben werden kann, Kabel, die mit den Bremselementen verbunden sind, die durch das Gehäuse auf jeder Seite der Schraube laufen und mit letzterem derart verbunden sind, dass die Drehung der Schraube in die eine Richtung oder die andere das Festziehen oder die Lockerung der Bremselemente bewirkt; und ein elektrischer Motor zum Antrieb der sich drehenden Schraube ist mit einem Befehlsschalter verbunden, der von der Fahrerkabine des Fahrzeugs aus bedient werden kann. Die Bremse ermöglicht eine Vergrößerung des Stauraums und des Komforts des Fahrzeugs, beseitigt die Notwendigkeit einer Einstellung bei der Montage oder während der Lebenszeit des Fahrzeugs, garantiert eine Verteilung der Klemmkraft zwischen den zwei Elementen und verringert die Kabellänge.

DE 196 53 541 A1 betrifft eine elektrisch betätigbare Stellvorrichtung für Feststellbremsen von Kraftfahrzeugen, bei der zur Erzielung einer funktionell verbesserten und redundanten Betätigung zwei Elektromotoren vorgesehen sind, die getrennt ansteuerbar ein Betätigen und Lösen der Bremsen ermöglichen.

Der Erfindung liegt die Aufgabe zugrunde, die Befestigung des Zugseils an der Spindel unter Berücksichtigung einer möglichst kurzen Baulänge zu verbessern. Diese Aufgabe wird mit den kennzeichnenden Merkmalen der nebengeordneten Ansprüche 1 und 8 gelöst.

Bei der erfindungsgemäßen Lösung mit den kennzeichnenden Merkmalen des Hauptanspruchs wird die Spindel mit einer durchgehenden ersten axialen Bohrung ausgebildet. Im Bereich einer Stirnfläche der Spindel wird eine zweite axiale Bohrung angeordnet, deren Durchmesser größer ist als der der ersten axialen Bohrung. Dadurch bildet sich im Bereich der zweiten Bohrung eine Tasche aus, in die ein handelsübliches Zugseil, dessen Ende mit einem Nippel ausgebildet ist, eingehängt werden kann. Auf diese Weise erhält man zwischen dem Zugseil und der Spindel eine sehr einfache, verkürzte Bauform.

Bei dem Spindelantrieb mit den kennzeichnenden Merkmalen des nebengeordneten Anspruchs 8 ergibt sich der Vorteil, dass der Spindelantrieb insgesamt betrachtet mit einem kleineren axialen Bauvolumen ausgebildet werden kann, als dieses bei bekannten Lösungen der Fall ist.

Durch die in den abhängigen Ansprüchen aufgeführten Maßnahmen sind vorteilhafte Weiterbildungen und Verbesserungen der im Anspruch 1 angegebenen Spindel gegeben. Als besonders vorteilhaft wird angesehen, dass das Zugseil durch die erste axiale Bohrung durchgeführt wird. Anschließend wird Nippel vollständig in die durch die zweite axiale Bohrung gebildete Tasche eingeführt. Dadurch wird die Befestigung des Zugseils an der Spindel nicht verlängert.

In weiterer Ausgestaltung der Erfindung ist vorgesehen, den Nippel nach dem Einlegen in die Tasche gegen ein Herauslösen aus der Tasche der zweiten axialen Bohrung zu arretieren. Eine besonders einfache Lösung zur Arretierung des Nippels in der Tasche wird darin gesehen, an der Stirnfläche der Spindel im Bereich der zweiten axialen Bohrung einen Prägerand anzuordnen, der den Nippel durch eine Prägung in der Tasche arretiert. Eine solche Prägung ist mit einem einfachen Stempel sehr leicht und ohne großen Mehraufwand durchführbar. Durch diese Arretierung des Nippels in der Tasche ergibt sich der weitere Vorteil, dass auf das Zugseil von der Spindel nicht nur eine Zugkraft übertragen werden kann, sondern auch eine Druckkraft. Dadurch kann insbesondere beim Lösen der Feststellbremse das Zugseil beispielsweise definiert, entspannt und in den Bowdenzug zurückgeschoben werden.

Eine weitere alternative Lösung zur Arretierung des Nippels wird durch Einpressen in die Tasche, durch Kleben, Schrauben, Vergießen oder Verstiften gesehen.

Der Spindelantrieb weist vorzugsweise einen Elektromotor auf, der zum Beispiel mittels eines Getriebes die Spindel in axialer Richtung verschiebt. Dadurch wirkt auf das Zugseil eine Zugkraft, durch die die Feststellbremse aktiviert wird. Durch Umkehren der Drehrichtung des Elektromotors wird das Zugseil entspannt und dabei die Bremse wieder gelöst.

Ein Ausführungsbeispiel der Erfindung ist in der Zeichnung dargestellt und wird in den nachfolgenden Figuren näher erläutert.
Figur 1 zeigt in schematischer Darstellung ein Ausführungsbeispiel der Erfindung, bei dem ein Zugseil mit einer Spindel verbunden ist,
Figur 2 zeigt ausschnittsweise eine Stirnfläche der Spindel, die mit einem Prägewulst ausgebildet ist,
Figur 3 zeigt ausschnittsweise ein Schnittbild durch die Spindel,

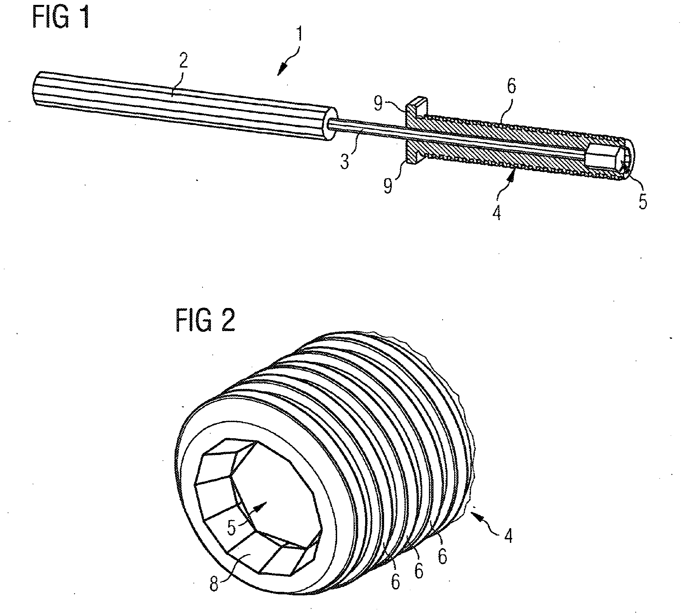

Figur 2 zeigt ein Schnittbild durch die Spindel, bei der das Zugseil mit dem Nippel eingeführt ist und

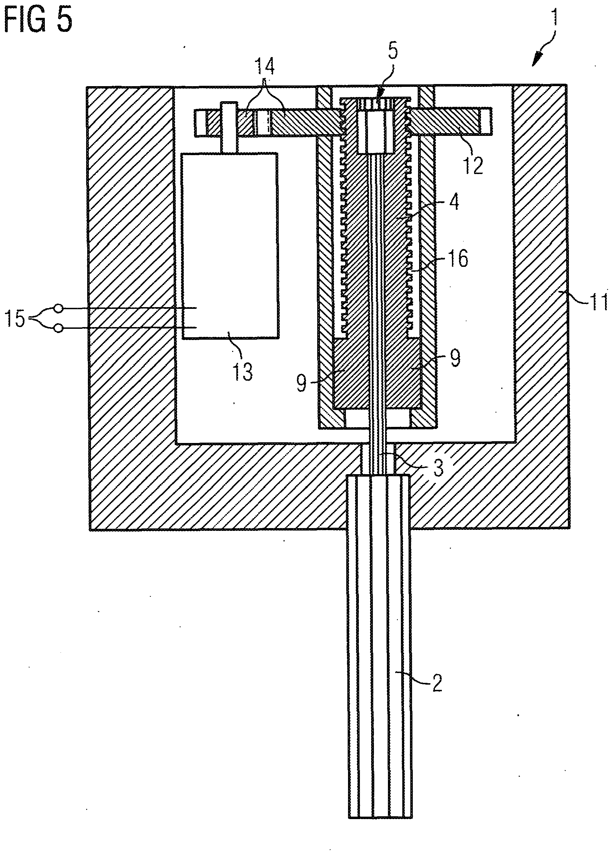

Figur 5 zeigt ein Schnittbild einer erfindungsgemäßen Zugvorrichtung in schematischer Darstellung.

In Figur 1 ist ein Ausführungsbeispiel der Erfindung dargestellt. Es zeigt die Hülle eine Bowdenzugs 2, in dem ein Zugseil 3 eingeführt ist. Der Bowdenzug 2 wird häufig durch ein schraubenförmig aufgewickeltes Metallband gebildet, das mit einer Schutzhülle aus Kunststoff umgeben ist. Dadurch ist der Bowdenzug 2 flexibel und biegbar und kann im Wesentlichen Druckkräfte aufnehmen, die beim Zug auf das Zugseil 3 entstehen. Innerhalb des Bowdenzugs 2 verläuft das Zugseil 3. Das eine Ende des Zugseils 3 wird an einer mechanischen Bremsvorrichtung eingehängt, die beispielsweise für ein einzelnes Rad ausgebildet ist (Die Bremsvorrichtung wurde aus Übersichtlichkeitsgründen in Figur 1 nicht näher dargestellt). Aus Figur 1 geht des Weiteren hervor, dass ein zweites freies Ende des Zugseils 3 mit einer Spindel 4 verbunden ist. Die Spindel 4 weist eine erste axiale Bohrung auf, wie später noch näher erläutert wird. Erfindungswesentlich ist, dass zur Verbindung des Zugseils 3 mit der Spindel 4 das Zugseil 3 zunächst durch die erste axiale Bohrung der Spindel 4 geführt wird. Die axiale Bohrung ist am gegenüberliegenden Ende an einer Stirnfläche der Spindel 4 (im rechten Teil von Figur 1) mit einem größeren Durchmesser (zweite axiale Bohrung) ausgebildet. In diese zweite axiale Bohrung wird der Nippel des Zugseils 3 vollständig eingelegt und arretiert. Der Nippel und das Zugseil 3 sind form- oder kraftschlüssig miteinander verbunden.

Die Spindel 4 ist mit einem Außengewinde ausgebildet und kann beim Drehen einer entsprechend angepassten Spindelmutter in axialer Richtung verschoben werden, wie später noch erläutert wird. Durch die axiale Verschiebung der Spindel 4 wird das Zugseil 3 aus dem Bowdenzug 2 mehr oder weniger herausgezogen bzw. bei Richtungsumkehr hineingedrückt.

Am linken Ende der Spindel 4 sind beispielsweise zwei Spindelführungen 9 angeordnet. Die Spindelführungen 9 sind als erhabene Körper, beispielsweise als Zapfen, Flächen oder dergleichen ausgebildet und sollen verhindern, dass sich die Spindel 4 mitdreht, wenn die Spindelmutter 12 (Figur 5) gedreht wird.

Figur 2 zeigt ausschnittsweise die rechte Stirnseite der Spindel 4 in vergrößerter Darstellung. Wie Figur 2 entnehmbar ist, ist die Spindel 4 mit dem Außengewinde 6 ausgebildet. Das Außengewinde 6 ist mit breiten Gewindegängen sehr massiv ausgebildet, um möglichst hohe Zugkräfte auf das Zugseil 3 übertragen zu können. An der Stirnfläche der Spindel 4 ist die zweite axiale Bohrung 5 erkennbar, die mit einem größeren Durchmesser ausgebildet ist und als Tasche zur Aufnahme des Nippels ausgeformt ist. Des Weiteren ist ein Prägerand 8 erkennbar, mit dem der Nippel zum Beispiel durch Prägung in der Tasche 5 fixiert werden kann.

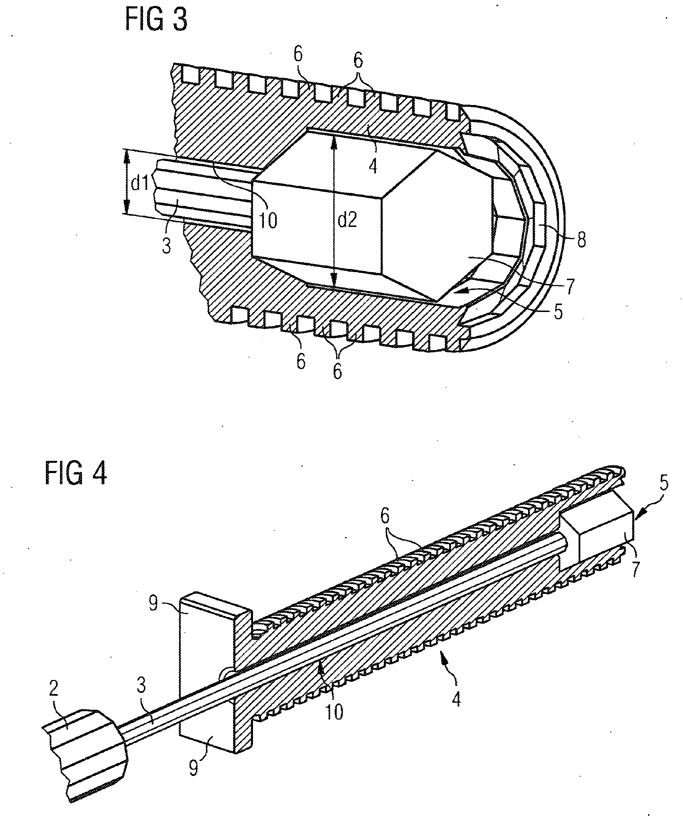

Figur 3 zeigt einen Längsschnitt im Bereich des Kopfteiles, wie er zuvor zu Figur 2 erläutert wurde. Im oberen Bereich von Figur 3 ist eine erste axiale Bohrung 10 erkennbar. Die erste axiale Bohrung ist mit einem Durchmesser d1 gebohrt. In dieser Bohrung verläuft das Zugseil 3. In das untere Ende der Spindel 4 ist die zweite axiale Bohrung 5 mit einem größeren Durchmesser d2 eingebracht, so dass sich eine entsprechende Tasche zur Aufnahme eines Nippels 7 ausbildet. Der Nippel 7 kann eine beliebige Form aufweisen, ist beispielsweise zylinderförmig ausgebildet und mit dem Zugseil 3 fest verbunden. Er kann beispielsweise durch Einpressen, Löten, Kleben oder dergleichen fest mit dem Zugseil 3 verbunden sein. Alternativ kann der Nippel 7 mittels einer Klemmschraube als lösbare Verbindung mit dem Zugseil 3 verbunden sein. Seitlich an der Spindel 4 sind die einzelnen Gewindegänge des Außengewindes 6 deutlich erkennbar. Des Weiteren ist am unteren Ende der Spindel 4 der Prägerand 8 erkennbar, mit dem der Nippel 7 nach dem Einführen in die Tasche 5 beispielsweise durch ein einfaches Verstemmen arretiert werden kann. Alternativ ist ein Verkleben, Verstiften, Schrauben oder dergleichen vorsehbar. Der Durchmesser der ersten axialen Bohrung 10 ist etwas größer ausgeführt als der Durchmesser des Zugseils 3, um ein einfaches Einfädeln des Zugseils 3 zu ermöglichen.

Figur 4 zeigt einen Längsschnitt durch die gesamte Spindel 4. Wie bereits zu Figur 1 beschrieben, ist die Spindel 4 mit der ersten axialen Bohrung 10 durchbohrt. Am rechten Ende der Spindel 4 ist die zweite axiale Bohrung 5 mit dem größeren Durchmesser d2 eingebracht, so dass sich an der Stufe die Tasche 5 zur Aufnahme des Nippels 7 ausbildet. Im linken Teil der Spindel 4 ist die Spindelführung 9 erkennbar, wie sie zuvor schon erläutert wurde.

Figur 5 zeigt einen Spindelantrieb, in dem die zuvor beschriebene Spindel 4 mit dem Bowdenzug 2 und dem Zugseil 3 eingebaut ist. Der Spindelantrieb 1 weist ein Gehäuse 1 mit einer Gehäusebohrung auf, in die die Spindel 4 axial beweglich eingeführt ist. Die Gehäusebohrung weist eine oder mehrere Führungsnuten 16 auf, in denen die Spindelführungen 9 geführt werden. Dadurch wird verhindert, dass sich die Spindel 4 mitdrehen kann. Des Weiteren weist das Gehäuse 11 eine Einlassbohrung auf, in die zunächst der Bowdenzug 2 eingeführt und hier fixiert wird. Dadurch kann sich der Bowdenzug 2 in Bezug auf das Gehäuse 11 nicht verschieben. Das Zugseil 3 wird durch die Gehäusebohrung durchgeführt und wie zuvor beschrieben mit der Spindel 4 in der Tasche 5 fixiert. Im Reparaturfall wird beispielsweise erst nach dem Einfädeln des Zugseils 3 in der Spindel 4 und dem Bowdenzug 2 der Nippel 7 auf das Zugseil 3 aufgesetzt und verlötet, eingepresst oder verschraubt. Der Antrieb für die Spindel 4 erfolgt vorzugsweise mit einem Elektromotor 13, der über entsprechende elektrische Zuleitungen 15 gesteuert werden kann. Der Elektromotor 13 ist mit einem Getriebe 14 ausgebildet, mit dem die Spindelmutter 12 angetrieben wird. Die Spindelmutter 12 ist so gelagert, dass sie sich nicht axial verschieben kann. Die Spindelmutter 12 ist mit einem inneren Gewinde ausgebildet, das in das Außengewinde 6 (Figur 2) der Spindel 4 greift. Bei Betätigung des Elektromotors 13 wird durch die Drehbewegung der Spindelmutter 12 die Spindel 4 in axialer Richtung verschoben. Zum Aktivieren des Bremssystems wird beispielsweise die Spindel 4 nach oben geschraubt, so dass das Zugseil 3 ein Stück aus dem Bowdenzug 2 herausgezogen wird. In der Gegenrichtung wird die Spindel 4 wieder nach unten bewegt und das Zugseil 3 entsprechend in den Bowdenzug 2 zurückgedrückt, so dass die Bremse wieder gelöst wird. Durch ein feinfühliges Bewegen der Spindel 4 kann eine mehr oder weniger starke Bremskraft auf die Feststellbremse übertragen werden.

In alternativer Ausgestaltung der Erfindung ist vorgesehen, den Spindelantrieb 1 für jedes zu bremsende Rad an einem Kraftfahrzeug auszubilden.

## Patentansprüche

1. Spindel, insbesondere als Bauteil für einen Spindelantrieb einer elektromechanischen Feststellbremse eines Kraftfahrzeugs, mit einer Vorrichtung zur axialen Befestigung eines Endes eines Zugseils (3) mit der Spindel, wobei die Spindel (4) eine durchgehende erste axiale Bohrung (10) mit einem ersten Durchmesser (d1) aufweist, dass an einer Stirnfläche der Spindel eine zweite axiale Bohrung (5) angeordnet ist und dass die zweite axiale Bohrung (5) einen zweiten Durchmesser (d2) aufweist, der größer ausgebildet ist als der erste Durchmesser (d1),
**dadurch gekennzeichnet, dass** die Spindel (4) mit einem Außengewinde (6) versehen ist.

2. Spindel nach Anspruch 1,
**dadurch gekennzeichnet, dass** die zweite axiale Bohrung (5) als Tasche zur vollständigen Aufnahme eines Nippels (7) des Zugseils (3) ausgebildet ist.

3. Spindel nach Anspruch 2,
**dadurch gekennzeichnet, dass** dass der Nippel (7) durch Einpressen, Löten oder Schrauben mit dem Ende des Zugseils (3) verbunden ist.

4. Spindel nach einem der vorhergehenden Ansprüche,
**dadurch gekennzeichnet, dass** der Nippel (7) nach dem Einlegen in die Tasche (5) gegen ein Herauslösen aus der Tasche (5) arretierbar ist.

5. Spindel nach Anspruch 4,
**dadurch gekennzeichnet, dass** im Bereich der Tasche (5) an der Stirnfläche der Spindel (4) ein Prägerand (8) ausgebildet ist, mit dem der Nippel (7) in der Tasche (5) arretierbar ist.

6. Spindel nach einem der Ansprüche 1 bis 4,
**dadurch gekennzeichnet, dass** der Nippel (7) durch Einpressen in die Tasche (5), durch Kleben, Schrauben, Verstiften oder dergleichen arretierbar ist.

7. Spindel nach einem der vorhergehenden Ansprüche,
**dadurch gekennzeichnet, dass** an der Spindel (4) eine Spindelführung (9) ausgebildet ist, die beim Antrieb der Spindel (4) als Verdrehschutz wirkt.

8. Spindelantrieb für eine Spindel (4) nach einem der vorhergehenden Ansprüche,
**dadurch gekennzeichnet, dass** die Spindel (4) in einem Gehäuse (11) eingebaut ist und dass das Gehäuse (11) eine Führungsnut (16) für die Spindelführung (9) aufweist, durch die die Spindel (4) axial verschiebbar und verdrehsicher führbar ist.

9. Spindelantrieb nach Anspruch 8,
**dadurch gekennzeichnet, dass** die Spindel (4) von einem Elektromotor (13) vorzugsweise mittels eines Getriebes (14) betätigbar ist.

10. Spindelantrieb nach einem der Ansprüche 8 oder 9,
**dadurch gekennzeichnet, dass** die Spindel (4) manuell durch Betätigung eines elektrischen Schalters und/oder automatisch betätigbar ist.

## Claims

1. Spindle, in particular as a component for a spindle drive of an electromechanical parking brake of a motor vehicle, having a device for axially attaching one end of a traction cable (3) to the spindle, wherein the spindle (4) has a continuous first axial drilled hole (10) with a first diameter (d1), in that a second axial drilled hole (5) is arranged on an end face of the spindle, and in that the second axial drilled hole (5) has a second diameter (d2) which is embodied so as to be larger than the first diameter (d1),
**characterized in that** the spindle (4) is provided with an external thread (6).

2. Spindle according to Claim 1,
**characterized in that**
the second axial drilled hole (5) is embodied as a pocket for completely holding a nipple (7) of the traction cable (3).

3. Spindle according to Claim 2,
**characterized in that**
the nipple (7) is connected to the end of the traction cable (3) by pressing in, soldering or screwing.

4. Spindle according to one of the preceding claims,
**characterized in that**
after insertion into the pocket (5) the nipple (7) can be locked to prevent it becoming detached from the pocket (5).

5. Spindle according to Claim 4,
**characterized in that**
a stamped edge (8), with which the nipple (7) can be locked in the pocket (5), is formed in the region of the pocket (5) on the end face of the spindle (4).

6. Spindle according to one of Claims 1 to 4,
**characterized in that**
the nipple (7) can be locked by pressing into the pocket (5), by bonding, screwing, bolting or the like.

7. Spindle according to one of the preceding claims,
**characterized in that**
a spindle guide (9), which acts as anti-rotation protection when the spindle (4) is driven, is formed on the spindle (4).

8. Spindle drive for a spindle (4) as claimed in one of the preceding claims,
**characterized in that**
the spindle (4) is installed in a housing (11) and **in that** the housing (11) has a guide groove (16) for the spindle guide (9) by means of which the spindle (4) can be axially displaced and guided in a rotatably secure fashion.

9. Spindle drive according to Claim 8,
**characterized in that**
the spindle (4) can be actuated by an electric motor (13), preferably by means of a gear mechanism (14).

10. Spindle drive according to one of Claims 8 and 9,
**characterized in that**
the spindle (4) can be actuated manually by actuating an electrical switch and/or can be actuated automatically.

## Revendications

1. Broche, notamment comme élément pour un entraînement par broche d'un frein de stationnement électromécanique d'un véhicule automobile, comprenant un dispositif de fixation axiale d'une extrémité d'un câble ( 3 ) de traction à la broche, la broche ( 4 ) ayant un premier trou ( 10 ) axial traversant d'un premier diamètre ( d1 ), en ce que, sur une surface frontale de la broche, est prévu un deuxième trou ( 5 ) axial et en ce que le deuxième trou ( 5 ) axial a un deuxième diamètre ( d2 ), qui est plus grand que le premier diamètre ( 1 ),
**caractérisée en ce que** la broche ( 4 ) est pourvue d'un filetage ( 6 ) extérieur.

2. Broche suivant la revendication 1,
**caractérisée en ce que**
le deuxième trou ( 5 ) axial est constitué en poche pour la réception complète d'un raccord ( 7 ) du câble ( 3 ) de traction.

3. Broche suivant la revendication 2,
**caractérisée en ce que**
le raccord ( 7 ) est relié à l'extrémité du câble ( 3 ) de traction par emmanchement, par brasage ou par soudage.

4. Broche suivant l'une des revendications précédentes, **caractérisée en ce que**
le raccord ( 7 ) peut, après avoir été introduit dans la poche ( 5 ), être empêché de se détacher de la poche ( 5 ).

5. Broche suivant la revendication 4,
**caractérisée en ce que**
il est formé, dans la zone de la poche ( 5 ) sur la surface frontale de la broche ( 4 ), un bord ( 8 ) estampé, par lequel le raccord ( 7 ) peut être bloqué dans la poche ( 5 ).

6. Broche suivant l'une des revendications 1 à 4,
**caractérisée en ce que**
le raccord ( 7 ) peut être bloqué par emmanchement dans la poche ( 5 ) par collage, par vissage, par goupillage ou analogues.

7. Broche suivant l'une des revendications précédentes,
**caractérisée en ce que**
il est formé sur la broche ( 4 ) un guidage ( 9 ) de broche qui, lorsque la broche ( 4 ) est entraînée, agit comme protection à l'encontre de la torsion.

8. Entraînement de broche pour une broche ( 4 ) suivant l'une des revendications précédentes,
**caractérisé en ce que**
la broche est montée dans une boîte ( 11 ) et **en ce que** la boîte ( 11 ) comporte une rainure ( 16 ) de guidage pour le guidage ( 9 ) de la broche, par lequel la broche ( 4 ) peut coulisser axialement et être guidée sans possibilité de torsion.

9. Entraînement de broche suivant la revendication 8,
**caractérisé en ce que**
la broche ( 4 ) peut être actionnée par un moteur ( 13 ) électrique, de préférence au moyen d'un engrenage ( 14 ).

10. Entraînement de broche suivant l'une des revendications 8 ou 9, **caractérisé en ce que** la broche ( 4 ) peut être actionnée manuellement par actionnement d'un interrupteur électrique et/ou automatiquement.
